# DEMANDE DE BREVET EUROPEEN

(11) **EP 4 082 865 A1**
(43) Date de publication de la demande: **02.11.2022**
(21) Numéro de dépôt: 22169774.1
(22) Date de dépôt: 25.04.2022
(51) Int. Cl.: B61D 33/00, B61D 1/04, B60N 2/90, B60N 2/01

(54) **ENSEMBLE D'AMÉNAGEMENT DE VÉHICULE, VÉHICULE ET PROCÉDÉ D'INSTALLATION ASSOCIÉS**

(30) Priorité: 27.04.2021 FR 2104339
(71) Demandeur: SpeedInnov, 75008 Paris (FR)
(72) Inventeur: BERNARD, Alexandre, 17340 CHATELAILLON PLAGE (FR)
(74) Mandataire: Lavoix

(57) **Abrégé**

Cet ensemble d'aménagement (16) de véhicule (10) comprend,
- un premier siège (20), définissant une première direction d'assise (A1); et
- un deuxième siège (22), latéralement adjacent au premier siège (20), définissant une deuxième direction d'assise (A2).

Le premier siège (20) et le deuxième siège (22) sont adaptés pour être agencés dans une configuration opposée, dans laquelle la première direction d'assise (A1) est parallèle et opposée à la deuxième direction d'assise (A2).

L'ensemble d'aménagement (16) de véhicule (10) comprend, lorsque le premier siège (20) et le deuxième siège (22) sont dans la configuration opposée, un élément de séparation (24).

L'élément de séparation (24) comprend une pluralité de panneaux (45), chaque panneau étant d'un seul tenant, et la pluralité de panneaux (45) comprend un panneau principal s'étendant entre le premier siège (20) et le deuxième siège (22) depuis un arrière (35) du premier dossier (30) jusqu'à un arrière (43) du deuxième dossier (38).

## Description

La présente invention concerne un ensemble d'aménagement de véhicule comprenant,
- un premier siège, comprenant une première assise et un premier dossier, définissant une première direction d'assise, depuis le premier dossier vers une extrémité libre de la première assise ; et
- un deuxième siège, latéralement adjacent au premier siège, comprenant une deuxième assise et un deuxième dossier, définissant une deuxième direction d'assise, depuis le deuxième dossier vers une extrémité libre de la deuxième assise ;
   le premier siège et le deuxième siège étant adaptés pour être agencés dans une configuration opposée, dans laquelle la première direction d'assise est parallèle et opposée à la deuxième direction d'assise,
   l'ensemble d'aménagement de véhicule comprenant, lorsque le premier siège et le deuxième siège sont dans la configuration opposée, un élément de séparation.

L'invention s'applique particulièrement aux véhicules de transport de passagers. Dans ces véhicules, il est généralement désirable d'obtenir une haute densité de passagers pour maximiser la rentabilité du véhicule et réduire l'empreinte écologique du transport de passagers.

Dans de tels véhicules, un ensemble d'aménagement comprend généralement au moins deux sièges latéralement adjacents et la distance entre les passagers occupant de tels sièges adjacents est faible. Il peut être souhaitable de maintenir une haute densité de passagers tout en isolant physiquement les passagers, notamment dans une situation d'épidémie ou pour améliorer le confort des passagers.

Un ensemble d'aménagement de véhicule comprenant un élément de séparation isolant physiquement des passagers a été proposé du document WO 2010/131014 A1. Un tel élément de séparation est notamment formé par deux coques formant elles-mêmes le dossier de chacun des sièges adjacents, chacune de ces coques comprenant un panneau s'étendant entre les sièges adjacents. Un tel élément de séparation vise à assurer la confidentialité des passagers.

Un tel ensemble d'aménagement ne donne alors pas entière satisfaction, notamment dans le cadre de la limitation de la propagation d'une épidémie. En effet, un tel ensemble d'aménagement isole insuffisamment les passagers et l'installation d'un tel ensemble d'aménagement peut s'avérer complexe et coûteuse.

Un but de l'invention est donc de proposer un ensemble d'aménagement assurant une bonne isolation physique des passagers tout en étant simple à installer, notamment dans des véhicules qui sont déjà équipés de sièges (pour une rénovation (en anglais « *rétrofit* ») ou un réaménagement) et peu coûteux.

A cet effet, l'invention a pour objet un ensemble d'aménagement de véhicule tel que précité, dans lequel l'élément de séparation comprend une pluralité de panneaux, chaque panneau étant d'un seul tenant, et
dans lequel la pluralité de panneaux comprend un panneau principal s'étendant entre le premier siège et le deuxième siège depuis un arrière du premier dossier jusqu'à un arrière du deuxième dossier.

Un élément de séparation comprenant un panneau principal d'un seul tenant s'étendant entre le premier siège et le deuxième siège depuis un arrière du premier dossier jusqu'à un arrière du deuxième dossier est particulièrement efficace pour isoler les passagers disposés sur le premier et le deuxième sièges. Un tel élément s'avère en outre aisé à produire et est peu coûteux.

Suivant d'autres aspects avantageux de l'invention, l'ensemble d'aménagement de véhicule comporte l'une ou plusieurs des caractéristiques suivantes, prise(s) isolément ou suivant toute combinaison techniquement possible :
- le panneau principal est formé par une plaque transparente, notamment en matière plastique ;
- la pluralité de panneaux comprend deux panneaux d'attache, un premier panneau d'attache étant fixé à l'arrière du premier dossier et un deuxième panneau d'attache étant fixé à l'arrière du deuxième dossier ;
- la pluralité de panneaux comprend au moins un panneau d'extrémité, le panneau d'extrémité s'étendant parallèlement au panneau principal depuis l'arrière du premier dossier ou l'arrière du deuxième dossier jusqu'à l'extrémité libre de l'assise associée audit dossier, le premier siège et le deuxième siège étant destinés à s'étendre entre le panneau d'extrémité d'une part et une paroi du véhicule d'autre part ;
- l'élément de séparation comprend au moins un profilé de maintien, chaque profilé de maintien étant solidarisé à deux panneaux adjacents de l'élément de séparation en connectant lesdits deux panneaux adjacents ;
- l'ensemble comprend un support de siège commun au premier siège et au deuxième siège ;
- le support de siège est réarrangeable entre un arrangement opposé, dans lequel le support de siège maintient le premier siège et le deuxième siège dans leur configuration opposée, et un arrangement cohérent, dans lequel le support de siège maintient le premier siège et le deuxième siège dans une configuration cohérente, la première direction d'assise étant égale à la deuxième direction d'assise lorsque le premier siège et le deuxième siège sont dans leur configuration cohérente ; et
- le support de siège comprend une première poutre fixée à la première assise et une deuxième poutre fixée à la deuxième assise, la première poutre étant alignée à la deuxième poutre lorsque le support de siège est dans son arrangement cohérent et la première poutre étant décalée par rapport à la deuxième poutre lorsque le support de siège est dans son arrangement opposé.

L'invention concerne en outre un véhicule comprenant un ensemble d'aménagement de véhicule tel que précité.

L'invention se rapporte par ailleurs à un procédé d'installation d'un ensemble d'aménagement tel que précité, comprenant les étapes suivantes :
- fourniture de l'ensemble d'aménagement, le premier siège et le deuxième siège étant agencés dans une configuration opposée ;
- installation de l'élément de séparation dans l'ensemble d'aménagement, l'élément de séparation étant fixé au premier siège et au deuxième siège pour que le panneau principal s'étende entre le premier siège et le deuxième siège.

L'invention sera mieux comprise à la lecture de la description qui va suivre, donnée uniquement à titre d'exemple non limitatif et faite en se référant aux figures suivantes, dans lesquelles :
[Fig 1] La figure 1 est une représentation schématique en perspective d'un ensemble d'aménagement de véhicule selon l'invention ;
[Fig 2] la figure 2 est une représentation schématique en perspective d'un détail de l'ensemble de la figure 1 ;
[Fig 3] la figure 3 est une représentation schématique vue de dessus de l'ensemble d'aménagement de la figure 1 ; et
[Fig 4] la figure 4 est une représentation schématique vue de dessus d'une variante particulière d'éléments de l'ensemble de séparation selon l'invention.

Dans la description qui suit, on considère une base orthonormée directe (X, Y, Z). La direction d'élévation Z est définie selon la hauteur du véhicule et correspond par exemple à la direction verticale lorsque le véhicule est sur une voie horizontale. La direction longitudinale X correspond à la direction avant-arrière du véhicule et la direction transversale Y correspond à la largeur du véhicule.

Les termes « avant » et « arrière » sont définis par rapport à la direction longitudinale X dans le sens normal de circulation du véhicule. Les termes « gauche » et « droite » sont définis par rapport à la direction transversale Y dans le sens normal de circulation du véhicule. Les termes « supérieur » et « inférieur » ainsi que « haut » et « bas » sont définis par rapport à la direction d'élévation Z.

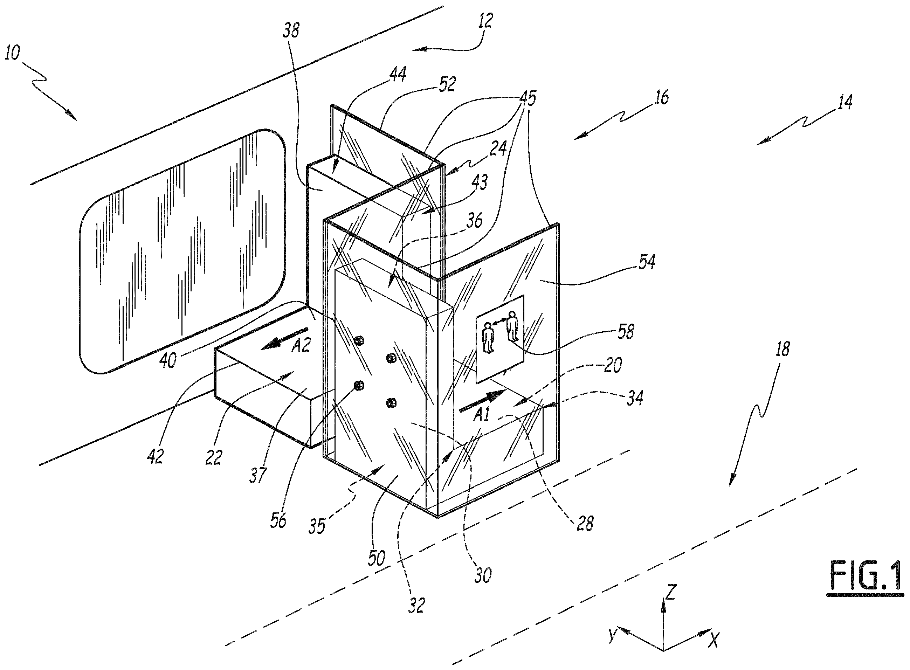

En référence à la figure 1, un véhicule 10 comprend une pluralité de parois 12 et un habitacle 14, la pluralité de parois définissant l'habitacle 14. Le véhicule comprend un ensemble d'aménagement de véhicule 16.

Le véhicule 10 est un véhicule de transport de passagers. Le véhicule 10 est de préférence un véhicule ferroviaire. Le véhicule 10 est par exemple une automotrice d'un train régional ou d'un train à grande vitesse. Le véhicule 10 est par exemple un métro ou un tramway. En variante, le véhicule 10 est un véhicule routier, tel un bus.

L'habitacle 14 comprend un couloir 18 s'étendant entre deux des parois 12. Le couloir 18 s'étend par exemple entre deux parois 12 transversales du véhicule 10. Le couloir 18 s'étend par exemple selon l'axe longitudinal du véhicule.

L'ensemble d'aménagement 16 comprend un premier siège 20 et un deuxième siège 22. L'ensemble d'aménagement 16 comprend, lorsque le premier siège 20 et le deuxième siège 22 sont dans une configuration opposée (décrite plus loin), un élément de séparation 24. L'ensemble d'aménagement 16 comprend de préférence un support de siège 26.

Le premier siège 20 et le deuxième siège 22 s'étendent entre le couloir 18 et l'une des parois 12. Le premier siège 20 et le deuxième siège 22 s'étendent l'un à côté de l'autre selon la direction transversale du véhicule.

Le premier siège 20 comprend une première assise 28 et un premier dossier 30.

La première assise 28 comprend une extrémité de jonction 32, la premier assise 28 étant connectée au premier dossier 30 par son extrémité de jonction 32. La première assise 28 comprend une extrémité libre 34, s'étendant à l'opposé de l'extrémité de jonction 32 de la première assise 28.

Le premier dossier 30 comprend un arrière 35, s'étendant sur la face du premier dossier 30 opposée à la première assise 28. Le premier dossier 30 comprend un sommet 36, s'étendant à l'opposé de la jonction entre le premier dossier 30 et la première assise 28.

Le premier siège 20 définit une première direction d'assise A1, depuis le premier dossier 30 vers l'extrémité libre 34 de la première assise. Dans la présente description, le terme première direction d'assise A1 signifie également premier sens d'assise.

Le deuxième siège 22 comprend une deuxième assise 37 et un deuxième dossier 38. La deuxième assise 37 comprend une extrémité de jonction 40, la deuxième assise 37 étant connectée au deuxième dossier 38 par son extrémité de jonction 40. La deuxième assise 37 comprend une extrémité libre 42, s'étendant à l'opposé de l'extrémité de jonction 40 de la deuxième assise 37.

Le deuxième dossier 38 comprend un arrière 43, s'étendant sur la face du deuxième dossier 38 opposée à la deuxième assise 37. Le deuxième dossier 38 comprend un sommet 44, s'étendant à l'opposé de la jonction entre le deuxième dossier 38 et la deuxième assise 37.

Le deuxième siège 22 définit une deuxième direction d'assise A2, depuis le deuxième dossier 38 vers l'extrémité libre 42 de la deuxième assise 37. Dans la présente description, le terme deuxième direction d'assise A2 signifie également deuxième sens d'assise.

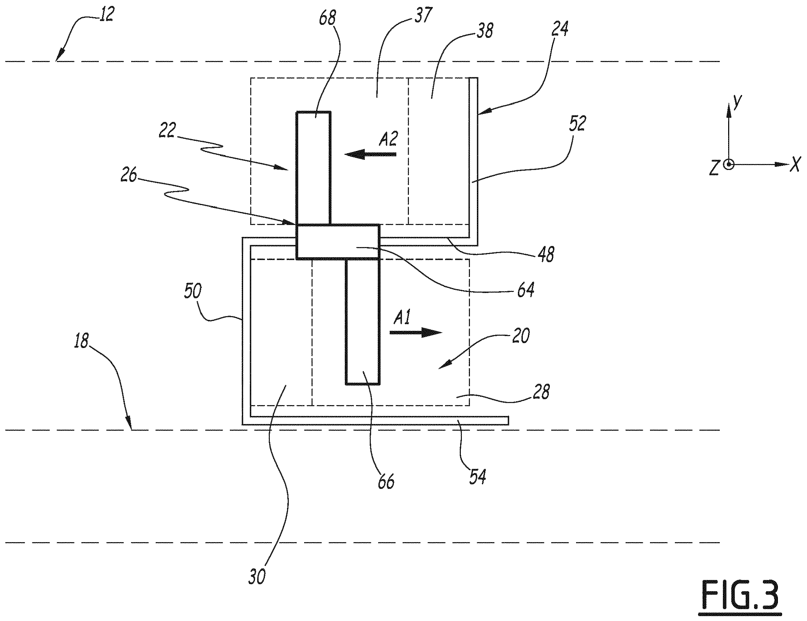

Comme illustré en figures 1 et 3, le premier siège 20 et le deuxième siège 22 sont adaptés pour être agencés dans une configuration opposée, dans laquelle la première direction d'assise A1 est parallèle et opposée à la deuxième direction d'assise A2. Dans la configuration opposée, l'extrémité de jonction 32 de la première assise 28 est par exemple alignée à l'extrémité libre 42 de la deuxième assise 37 et l'extrémité de libre 34 de la première assise 28 est par exemple alignée à l'extrémité de jonction 40 de la deuxième assise 37.

Lorsque le premier siège 20 et le deuxième siège 22 sont dans leur configuration opposée, l'ensemble d'aménagement 16 comprend l'élément de séparation 24. On entend ici que lorsque le premier siège 20 et le deuxième siège 22 sont dans leur configuration opposée, l'élément de séparation 24 est installé entre le premier siège 20 et le deuxième siège 22.

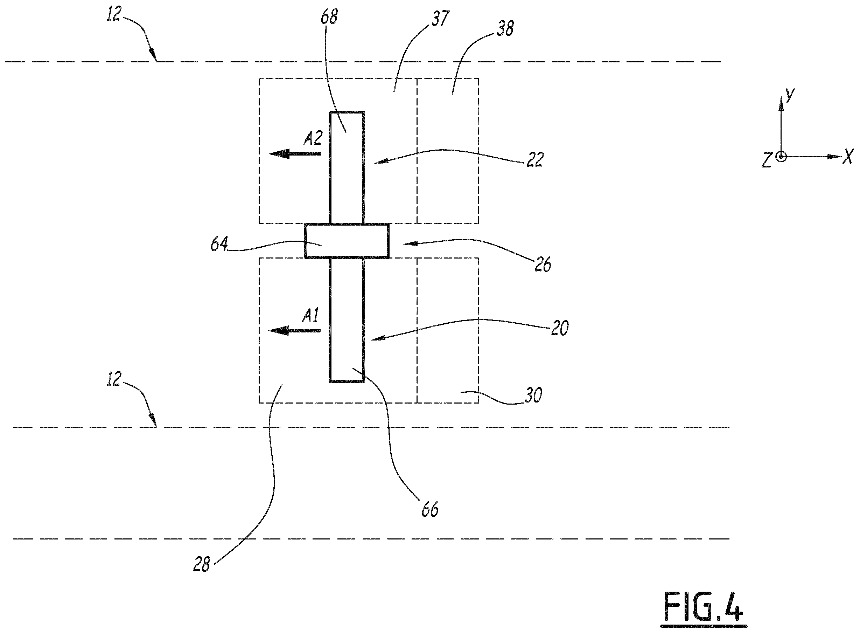

Dans une variante particulière, illustrée en figure 4, le premier siège 20 et le deuxième siège 22 sont adaptés pour être agencés dans une configuration cohérente, dans laquelle la première direction d'assise A1 est égale à la deuxième direction d'assise A2, c'est-à-dire que la première direction d'assise A1 est parallèle et de même orientation que la deuxième direction d'assise A2. Dans la configuration cohérente, l'extrémité de jonction 32 de la première assise 28 est par exemple alignée à l'extrémité de jonction 40 de la deuxième assise 37 et l'extrémité de libre 34 de la première assise 28 est par exemple alignée à l'extrémité libre 42 de la deuxième assise 37.

Lorsque le premier siège 20 et le deuxième siège 22 sont dans leur configuration cohérente, l'élément de séparation 24 est disposé à l'écart du premier siège 20 et du deuxième siège 22. L'élément de séparation 24 est par exemple réservé dans le véhicule 10 ou à l'extérieur du véhicule 10, en attente de la mise du premier siège 20 et du deuxième siège 22 dans leur configuration opposée.

Dans la partie suivante de la description, le premier siège 20 et le deuxième siège 22 sont dans leur configuration opposée, tel qu'illustré sur les figures 1 et 3, tant qu'il n'est pas précisé autrement.

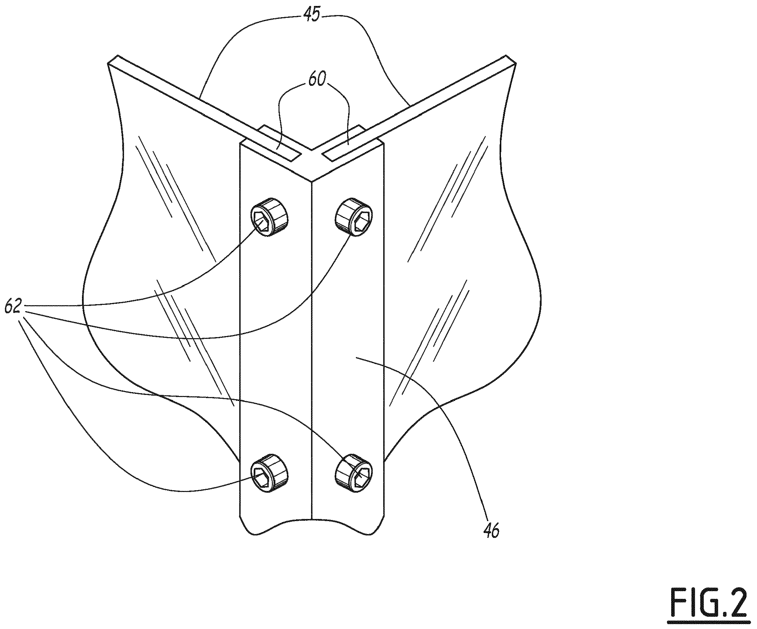

L'élément de séparation 24 comprend une pluralité de panneaux 45 et comprend de préférence une pluralité de profilés de maintien 46. Pour des raisons de clarté des figures, les profilés de maintien, visibles sur la figure 2, n'ont pas été représentés sur les figures 1 et 3.

La pluralité de panneaux 45 comprend un panneau principal 48. La pluralité de panneaux 45 comprend de préférence un premier panneau d'attache 50 et un deuxième panneau d'attache 52. La pluralité de panneaux comprend de préférence un panneau d'extrémité 54.

Chaque panneau de la pluralité de panneaux 45 est d'un seul tenant et est de préférence plan.

Le panneau principal 48 est de préférence formé par une plaque transparente, notamment en matière plastique.

Le panneau principal 48 s'étend entre le premier siège 20 et le deuxième siège 22, et de préférence parallèlement ou sensiblement parallèlement aux première et deuxième directions d'assise A1 et A2.

Le panneau principal 48 s'étend depuis l'arrière 35 du premier dossier 30 jusqu'à l'arrière 43 du deuxième dossier 38.

Le panneau principal 48 s'étend de préférence le long de toute la hauteur du premier dossier 30 et du deuxième dossier 38. Le panneau principal s'étend en particulier entre la première assise 28 et la deuxième assise 37 d'une part et entre le sommet 36 du premier dossier 30 et le sommet 44 du deuxième dossier 38 d'autre part.

Le panneau principal 48 dépasse par exemple verticalement le premier dossier 30 et le deuxième dossier 38 d'au moins 20 cm, préférablement d'au moins 50 cm.

Le premier panneau d'attache 50 et le deuxième panneau d'attache 52 sont de préférence chacun formés par une plaque transparente, notamment en matière plastique.

Le premier panneau d'attache 50 s'étend sur l'arrière 35 du premier dossier 30 et est fixé à l'arrière 35 du premier dossier 30 comme illustré sur la figure 1. L'ensemble d'aménagement 16 comprend alors par exemple des moyens de fixation 56 du premier panneau d'attache 50 sur le premier dossier 30, comme par exemple illustré par des vis en figure 1.

Le premier panneau d'attache 50 dépasse par exemple verticalement du premier dossier 30, au-delà du sommet 36 du premier dossier, d'au moins 20 cm, préférablement d'au moins 50 cm.

Le premier panneau d'attache 50 est connecté au panneau principal 48, de préférence par l'un des profilés de maintien 46.

Le deuxième panneau d'attache 52 s'étend sur l'arrière 43 du deuxième dossier 38 et est fixé à l'arrière 43 du deuxième 38 comme illustré sur la figure 1. L'ensemble d'aménagement 16 comprend alors par exemple des moyens de fixation du deuxième panneau d'attache 52 sur le deuxième dossier 38, comme par exemple des vis (non représentées).

Le deuxième panneau d'attache 52 déborde par exemple verticalement du deuxième dossier 38, au-delà du sommet 44 du premier dossier, d'au moins 20 cm, préférablement d'au moins 50 cm.

Le deuxième panneau d'attache 52 est connecté au panneau principal 48, de préférence par l'un des profilés de maintien 46.

Le premier panneau d'attache 50 est de préférence identique au deuxième panneau d'attache 52.

Le panneau d'extrémité 54 est de préférence formé par une plaque transparente, notamment en matière plastique.

Le panneau d'extrémité 54 s'étend parallèlement au panneau principal 48. Le panneau d'extrémité 54 s'étend depuis l'arrière 35 du premier dossier 30 ou l'arrière 43 du deuxième dossier 38, jusqu'à l'extrémité libre 34, 42 de l'assise 28, 37 associée audit dossier 30, 38. Dans l'exemple des figures 1 et 3, le panneau d'extrémité 54 s'étend depuis l'arrière 35 du premier dossier 30 jusqu'à l'extrémité libre 34 de l'assise 28 associée au premier dossier 30.

Le panneau d'extrémité 54 s'étend entre le couloir 18 d'une part et le premier siège 20 et le deuxième siège 22 d'autre part. Le premier siège 20 et le deuxième siège 22 s'étendent alors entre le panneau d'extrémité 54 d'une part et l'une des parois 12 du véhicule 10 d'autre part.

Le panneau d'extrémité 54 est connecté à l'un des premier 50 ou deuxième 52 panneaux d'attache, de préférence par un profilé de maintien 46. Dans le mode de réalisation de la figure 1, le panneau d'extrémité 54 est connecté au premier panneau d'attache 50.

Le panneau d'extrémité 54 dépasse par exemple verticalement le premier dossier 30 et le deuxième dossier 38 d'au moins d'au moins 20 cm, préférablement d'au moins 50 cm.

Dans une variante particulière, le panneau d'extrémité 54 est identique au panneau principal 48.

L'ensemble d'aménagement 16 ou l'élément de séparation 24 comprend donc ici quatre panneaux, mais ne comprend pas plus que les quatre panneaux. En particulier, l'ensemble d'aménagement comprend un unique panneau d'extrémité, fixé à l'un des panneaux principaux, et l'autre des panneaux principaux n'étant pas connecté à un panneau d'extrémité.

Comme illustré dans la figure 1, l'ensemble d'aménagement 16 comprend, dans une variante particulière, un élément informatif 58. L'élément informatif 58 est de préférence fixé sur le panneau d'extrémité 54 et est destiné à contenir une information visible/lisible par des passagers disposés dans le couloir 18. L'élément informatif 58 comprend par exemple du texte et/ou des pictogrammes incitant les passagers à respecter des gestes barrières pour limiter la propagation d'une épidémie.

En référence à la figure 2, chaque profilé de maintien 46 est solidarisé à deux panneau 45 adjacents de l'élément de séparation 24. Chaque profilé de maintien 46 connecte et immobilise deux panneaux 45 adjacents entre eux.

Chaque profilé de maintien 46 comprend par exemple deux fentes 60 dans lesquelles sont reçus deux panneaux 45 adjacents de l'élément de séparation 24.

Chaque profilé de maintien 46 comprend de préférence des moyens de maintien 62, tels des pions ou des vis, configuré pour maintenir les panneaux 45 en position dans les fentes 60.

L'angle formé entre deux panneaux 45 adjacents ainsi maintenu est de préférence compris entre 80° et 100° et est de préférence de 90°.

Le support de siège 26 est de préférence commun au premier siège 20 et au deuxième siège 22.

Le support de siège 26 comprend de préférence un pilier 64, une première poutre 66 et une deuxième poutre 68.

La première poutre 66 et la deuxième poutre 68 sont par exemple fixées sur le pilier 64, la première poutre supportant la première assise 28 et connectant le premier siège 20 au pilier 64, la deuxième poutre supportant la deuxième assise 37 et connectant le deuxième siège 22 au pilier 64.

Le support de siège 26 est de préférence réarrangeable entre un arrangement opposé et un arrangement cohérent.

Dans la partie précédente de la description dans laquelle le premier siège 20 et le deuxième siège 22 sont dans leur configuration opposée, le support de siège 26 est dans son arrangement opposé.

Lorsque le support de siège 26 est dans son arrangement opposé, il maintient le premier siège 20 et le deuxième siège 22 dans leur configuration opposée.

Comme illustré sur la figure 3, lorsque le support de siège 26 est dans son arrangement opposé, la première poutre 66 est de préférence décalée par rapport à la deuxième poutre 68 selon les directions d'assise A1 et A2. La première poutre 66 et la deuxième poutre 68 s'étendent en particulier parallèlement et dans un même plan horizontal dans le véhicule 10 mais sont décalées longitudinalement dans le véhicule 10 l'une par rapport à l'autre.

Lorsque le support de siège 26 est dans son arrangement cohérent, il maintient le premier siège 20 et le deuxième siège 22 dans leur configuration cohérente.

Comme illustré sur la figure 4, lorsque le support de siège 26 est dans son arrangement cohérent, la première poutre 66 est de préférence alignée par rapport à la deuxième poutre 68.

Un procédé d'installation d'un ensemble d'aménagement 16 tel que précédemment décrit va maintenant être présenté.

Lors d'une première étape, le premier siège 20 et le deuxième siège 22 sont fournis dans une configuration opposée.

Si le premier siège 20 et le deuxième siège 22 ne sont pas fournis dans une configuration opposée, les sièges sont alors amenés dans leur configuration opposée, par exemple par un réarrangement du support de siège 26 pour maintenir les sièges dans leur configuration opposée.

Lors d'une deuxième étape, l'élément de séparation 24 est installé dans l'ensemble d'aménagement 16. L'élément de séparation 24 est alors par exemple amené d'une position de stockage dans laquelle il était à l'écart des sièges 20, 22 à une position installée sur les sièges 20, 22.

L'élément de séparation 24 est alors fixé au premier siège 20 et au deuxième siège 22 pour que le panneau principal 48 s'étende entre le premier siège 20 et le deuxième siège 22.

## Revendications

1. Ensemble d'aménagement (16) de véhicule (10) comprenant,
- un premier siège (20), comprenant une première assise (28) et un premier dossier (30), définissant une première direction d'assise (A1), depuis le premier dossier (30) vers une extrémité libre (34) de la première assise (28) ; et
- un deuxième siège (22), latéralement adjacent au premier siège (20), comprenant une deuxième assise (37) et un deuxième dossier (38), définissant une deuxième direction d'assise (A2), depuis le deuxième dossier (38) vers une extrémité libre (42) de la deuxième assise (37) ;
le premier siège (20) et le deuxième siège (22) étant adaptés pour être agencés dans une configuration opposée, dans laquelle la première direction d'assise (A1) est parallèle et opposée à la deuxième direction d'assise (A2),
l'ensemble d'aménagement (16) de véhicule (10) comprenant, lorsque le premier siège (20) et le deuxième siège (22) sont dans la configuration opposée, un élément de séparation (24),
**caractérisé en ce que**, l'élément de séparation (24) comprend une pluralité de panneaux (45), chaque panneau étant d'un seul tenant, et
**en ce que** la pluralité de panneaux (45) comprend un panneau principal (48) s'étendant entre le premier siège (20) et le deuxième siège (22) depuis un arrière (35) du premier dossier (30) jusqu'à un arrière (43) du deuxième dossier (38).

2. Ensemble (16) selon la revendication 1, dans lequel le panneau principal (48) est formé par une plaque transparente, notamment en matière plastique.

3. Ensemble selon la revendication 1 ou 2, dans lequel la pluralité de panneaux (45) comprend deux panneaux d'attache (50, 52), un premier panneau d'attache (50) étant fixé à l'arrière (35) du premier dossier (30) et un deuxième panneau d'attache (52) étant fixé à l'arrière du deuxième dossier (38).

4. Ensemble (16) selon l'une quelconque des revendications précédentes, dans lequel la pluralité de panneaux (45) comprend au moins un panneau d'extrémité (54), le panneau d'extrémité (54) s'étendant parallèlement au panneau principal (48) depuis l'arrière (35) du premier dossier (30) ou l'arrière (43) du deuxième dossier (38) jusqu'à l'extrémité libre (34, 42) de l'assise associée audit dossier (30, 38), le premier siège (20) et le deuxième siège (22) étant destinés à s'étendre entre le panneau d'extrémité (54) d'une part et une paroi (12) du véhicule (10) d'autre part.

5. Ensemble (16) selon l'une quelconque des revendications précédentes, dans lequel l'élément de séparation (24) comprend au moins un profilé de maintien (46), chaque profilé de maintien (46) étant solidarisé à deux panneaux (45) adjacents de l'élément de séparation (24) en connectant lesdits deux panneaux (45) adjacents.

6. Ensemble (16) selon l'une quelconque des revendications précédentes, dans lequel l'ensemble (16) comprend un support de siège commun (26) au premier siège (20) et au deuxième siège (22).

7. Ensemble (16) selon la revendication 6, dans lequel le support de siège (26) est réarrangeable entre un arrangement opposé, dans lequel le support de siège (26) maintient le premier siège (20) et le deuxième siège (22) dans leur configuration opposée, et un arrangement cohérent, dans lequel le support de siège (26) maintient le premier siège (20) et le deuxième siège (22) dans une configuration cohérente, la première direction d'assise (A1) étant égale à la deuxième direction d'assise (A2) lorsque le premier siège (20) et le deuxième siège (22) sont dans leur configuration cohérente.

8. Ensemble (16) selon la revendication 7, dans laquelle le support de siège (26) comprend une première poutre (66) fixée à la première assise (28) et une deuxième poutre (68) fixée à la deuxième assise (37), la première poutre (66) étant alignée à la deuxième poutre (68) lorsque le support de siège (26) est dans son arrangement cohérent et la première poutre (66) étant décalée par rapport à la deuxième poutre (68) lorsque le support de siège (26) est dans son arrangement opposé.

9. Véhicule (10) comprenant un ensemble d'aménagement (16) de véhicule (10) selon l'une quelconque des revendications précédentes.

10. Procédé d'installation d'un ensemble d'aménagement (16) selon l'une quelconque des revendications 1 à 8, comprenant les étapes suivantes :
- fourniture de l'ensemble d'aménagement (16), le premier siège (20) et le deuxième siège (22) étant agencés dans une configuration opposée ;
- installation de l'élément de séparation (24) dans l'ensemble d'aménagement, l'élément de séparation (24) étant fixé au premier siège (20) et au deuxième siège (22) pour que le panneau principal (48) s'étende entre le premier siège (20) et le deuxième siège (22).
